# EUROPEAN PATENT APPLICATION

(11) **EP 1 207 088 A2**
(43) Date of publication of application: **22.05.2002**
(21) Application number: 01123365.7
(22) Date of filing: 10.10.2001
(51) Int. Cl.: B60R 22/46

(54) **Pretensioner**

(30) Priority: 17.11.2000 JP 2000350925
(71) Applicant: TAKATA CORPORATION, Minato-ku, Tokyo 106-8510 (JP)
(72) Inventor: Kameyoshi, Hikaru, Minato-ku, Tokyo 106-8510 (JP); Takehara, Hiroki, Minato-ku, Tokyo 106-8510 (JP); Hamaue, Tetsuya, Minato-ku, Tokyo 106-8510 (JP)
(74) Representative: Banzer, Hans-Jörg, Dipl.-Ing.

(57) **Abstract**

In order to provide a pretensioner which is improved to achieve a more stable operation, inside a pipe (11) of a pretensioner (10), a plurality of balls (15) which are applied with lubrication coating are arranged. A clearance (H) for the passage of the balls at a distal end portion of the pipe (11) is determined by the balance of the followings: (a) the inner diameter of the pipe (11), (b) the root circle diameter of the external teeth of the ring gear (18) and the external teeth (18a), and (c) the position of a spool (102) coupled with a pinion (20). The space for allowing the balls (15) to pass is defined by the inner surface of a straight portion (11D) of the pipe (11) and contact portions of the external teeth (18a) of the ring gear (18) with the balls (15). The clearance (H) is set in such a manner that the width of the space is smaller than the diameter of the balls.

## Description

### [Industrial Field of the Invention]

The present invention relates to a pretensioner which is installed in a seat belt device for restraining an occupant to a vehicle seat and which rapidly rotates a reel shaft of a seat belt retractor in the belt winding direction. More particularly, the present invention relates to an improved pretensioner which achieves a more stable operation.

### [Related Art and Problems to be resolved by the Invention]

Vehicles such as automobiles are equipped with seat belt devices. In recent years, the ratio of seat belt devices with pretensioners has been increasing. The function of a pretensioner is to remove slack of a seat belt and also to apply tension to the seat belt by rapidly rotating a spool (reel shaft), on which the seat belt is wound, in the belt winding direction. A typical type of pretensioner has explosive which is detonated in accordance with a signal emitted in the event of a vehicle collision and drives a mechanism for rotating a spool with gas pressure derived from explosion of the explosive.

As an example of a seat belt retractor provided with such a pretensioner, the following will be referred.
Fig. 7 is an exploded perspective view showing one example of a seat belt retractor with a pretensioner of this type.
Fig. 8 is a cross-sectional view showing the pretensioner shown in Fig.7 in its operative state (when a ring gear and a pinion are meshed with each other).
Fig. 9 is a partially enlarged frontal view showing the pretensioner in its operative state.
It should be noted that the pretensioner shown in these drawings is now being developed and thus not known yet. In these drawings, some parts are not illustrated because these are not necessary for describing the present invention.

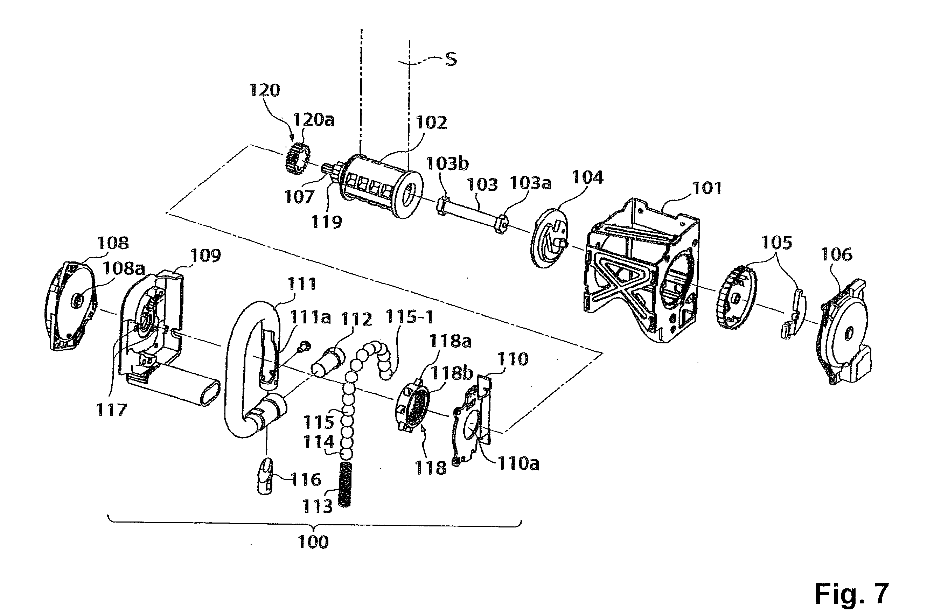

First, description will be made with regard to the basic structure of the seat belt retractor with reference to Fig. 7.
In Fig. 7, numeral 101 designates a base frame. A spool 102 is rotatably received in the base frame 101. Wound on the spool 102 is a seat belt S. Rotation of the spool 102 causes winding/unwinding of the seat belt S. The spool 102 is provided with a torsion bar 103 along the axis of the spool 102.

One end 103a (the right end in Fig. 7) of the torsion bar 103 is supported by a retainer 106 via two locking mechanisms 104, 105. The other end 103b (the left end in Fig. 7) of the torsion bar 103 is fixed inside the spool 102. On the left end face of the spool 102, a spool shaft 107 and a spool gear 119 are integrally formed. The spool shaft 107 extends through the inside of a pretensioner 100 and is engaged with a gear 108a in a return spring cover 108. Thus, the spool 102 is biased in a direction of winding up the seat belt S by a return spring in the return spring cover 108.

The seat belt retractor having the aforementioned basic structure is provided with the pretensioner 100. Hereinafter, the structure of the pretensioner 100 will be described.
The pretensioner 100 shown in Fig. 7 comprises a pipe 111. The pipe 111 is disposed between a pretensioner cover 109 and a pretensioner plate 110. At the proximal end of the pipe 111, a gas generator 112 is fixed. Arranged inside the pipe 111 are, in the order from the gas generator 112, a stopper spring 113, a piston 114, and a plurality of balls 115(15 balls in the illustrated example). At the other end (the distal end) of the pipe 111, a guide block 116 is fitted. The pipe 111 has a cut-out 111a formed in a peripheral portion near the distal end thereof.

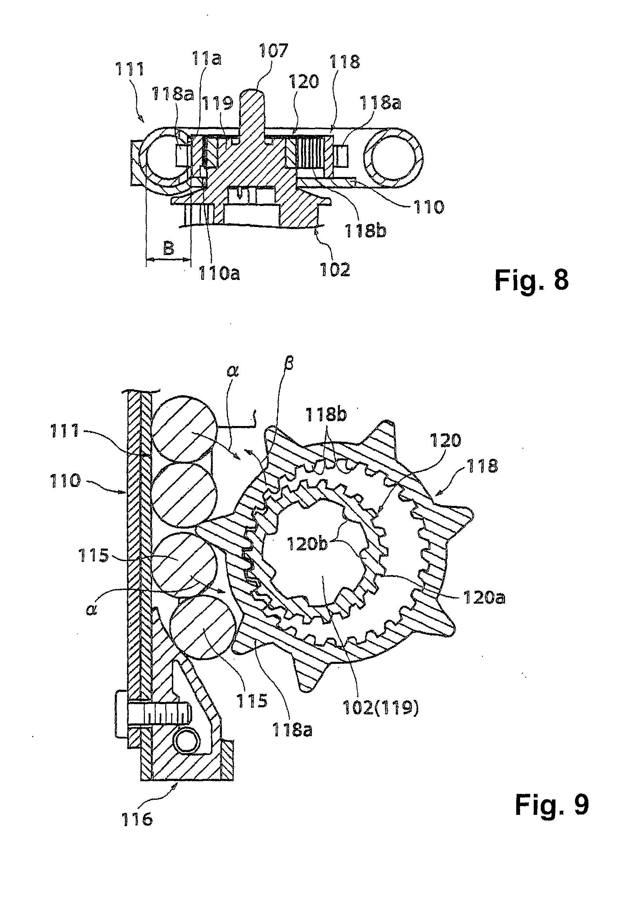

The pretensioner cover 109 is provided with two pins 117 studded thereto. A ring gear 118 is held to the pretensioner cover 109 by the pins 117. The ring gear 118 has a plurality of external teeth 118a on the outer periphery thereof and a plurality of internal teeth 118b on the inner periphery thereof. One or more of the external teeth 118a of the ring gear 118 enter in the cut-out 111a of the pipe 111. The front-most ball 115-1 is in contact with one of the external teeth 118a of the ring gear 118. It should be noted that the state shown in Fig. 9 is a state immediately after the actuation of the pretensioner 100.

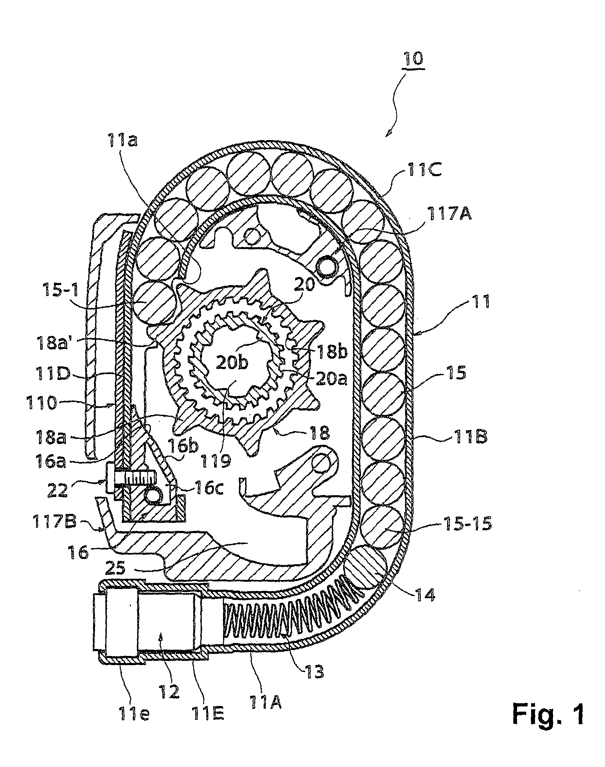

Inside of the ring gear 118, as shown in Fig. 8, a pinion 120 is positioned to be fitted to the spool gear 119 of the spool 102. The pinion 120 has a plurality of external teeth 120a formed on the outer periphery thereof. The internal teeth 118b of the ring gear 118 and the external teeth 120a are designed to be meshed with each other. In the normal state (before the actuation of the pretensioner), the two balls meshing with external teeth of the ring gear 118 in the state illustrated in Fig. 9 are not located at the illustrated position yet and the ring gear 118 is positioned more left than the illustrated position so that a predetermined clearance is ensured between the internal teeth 118b of the ring gear 118 and external teeth 120a of the pinion 120 (see Fig. 1).

The operation of the pretensioner 100 will be described below.
Before the actuation of the pretensioner 100, the ring gear 118 is held by the pins 117. In this state, the ring gear 118 and the pinion 120 are out of mesh. Therefore, the spool 102 can freely rotate. When the gas generator 112 is ignited to generate gas, the balls 115 are pushed via the piston 114 by the pressure of gas. As a result, the pins 117 are sheared by forces from the balls 115, whereby the ring gear 118 is released to be free and the internal teeth 118b of the ring gear 118 and the external teeth 120a of the pinion 120 are meshed with each other as shown in Fig. 8 and Fig. 9. As the ring gear 118 is forced to be rotated by the balls 115, the spool 102 is rotated via the pinion 120 coupled with the ring gear 118. In this manner, the seat belt is pretensioned.

By the way, as for the pretensioner 100 as mentioned above, the width (marked by "B" in Fig. 8) of the path for the balls 115 at the distal end side of the pipe 111 is determined by the balance of the followings (a) through (c): (a) the inner diameter of the pipe 111, (b) the root circle diameter of the external teeth of the ring gear 118 and the pitch of the external teeth 118a, and (c) the position of the spool 102 coupled with the pinion 120. As described in detail, as shown in Fig. 8, the spool 102 is positioned in such a manner as to come in contact with an edge (the left side edge of Fig. 8) of a hole 110a of the pretensioner plate 110. The pipe 111 and the ring gear 118 are arranged in a positional relation relative to the spool 102 allowing the smooth passage of the balls 115 by rotating the spool 102. The distance (width B) thus formed is the path for the balls 115.

However, when the width B of the path for the balls 115 is determined by the aforementioned positional relation, there is a possibility that a clearance is created between the balls 115 and the ring gear 118 due to dimensional tolerance and/or deformation of the respective components. In this state, as shown in Fig. 9, balls may run off in a direction of arrow α and the ring gear 118 may shift in a direction of arrow β. Such runoff of balls 115 and shifting of the ring gear 118 may bring failure of meshing between the internal teeth 118b of the ring gear 118 and the external teeth 120a of the pinion 120 so as not to allow the stable operation of the pretensioner.

The present invention was made to solve the aforementioned problems and the object of the invention is to provide a pretensioner which is improved to achieve more stable operation.

### [Means to Solve the Problems and Embodiments for carrying out the Invention]

According to the present invention, this object is achieved by a pretensioner as defined in claim 1. The dependent claim defines a preferred and advantageous embodiment of the present invention.
To solve the aforementioned problems, the present invention provides a pretensioner which rotates a spool of a seat belt retractor in the belt winding direction to pretension a seat belt in the event of an emergency, comprising: a gas generator; a plurality of serial balls which will be accelerated by the gas from the gas generator; a path for guiding the balls; and a rotational member having a plurality of driving points wherein said balls collide with said driving points so as to apply rotational torque to said rotatable member, and being characterized in that the driving points of said rotational member are partially positioned within said path, and the space for the passage of the balls which is defined by said path and said driving points is narrower than the diameter of said balls.

At the actuation of the pretensioner, the gas generator is triggered to accelerate the balls whereby the front-most ball press a driving point of the rotational member. As the driving point is pressed, rotational torque is applied to the rotational member so that the rotational member rotates and is coupled with the spool, thereby winding up the seat belt. During this, the balls pass through the space which is narrower than the diameter of the balls. This prevents the balls from running off and prevents the rotational member from shifting, thereby achieving stable operation of the pretensioner.

According to the present invention, the surfaces of the balls are preferably applied with lubrication coating.
In this case, the frictional resistance of the surface of each ball can be reduced, thus achieving reduction in power loss of the pretensioner. It should be noted that a solid lubricant of MoS₂ series (for example, Solvest "dry coat"® available from STT INC.) may be employed as this coating material.

### [Embodiments for carrying out the Invention]

Hereinafter, the present invention will be described with reference to the attached drawings.
Fig. 1 is a frontal sectional view of a pretensioner according to an embodiment of the present invention, showing the state before the actuation.

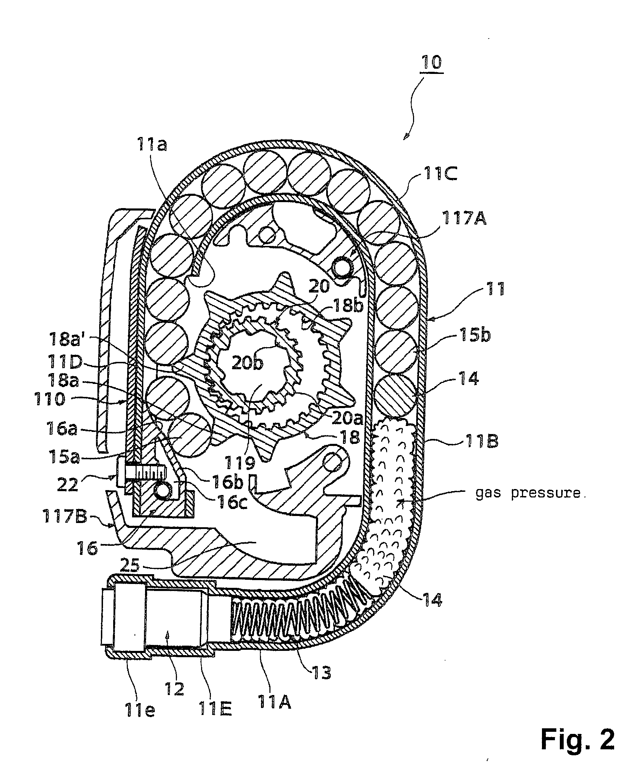

Fig. 2 is a frontal sectional view of the pretensioner, showing the state just after the actuation.

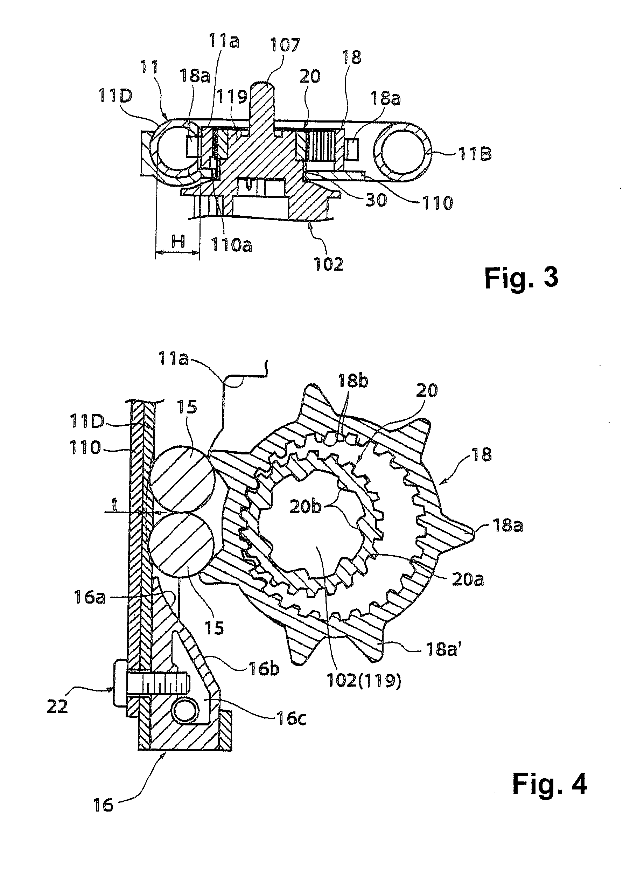

Fig. 3 is a cross-sectional view of the pretensioner in its operative state (when a ring gear and a pinion are meshed with each other).
Fig. 4 is a partially enlarged frontal view of the pretensioner in its operative state, for clearly showing a lap dimension when balls pass.

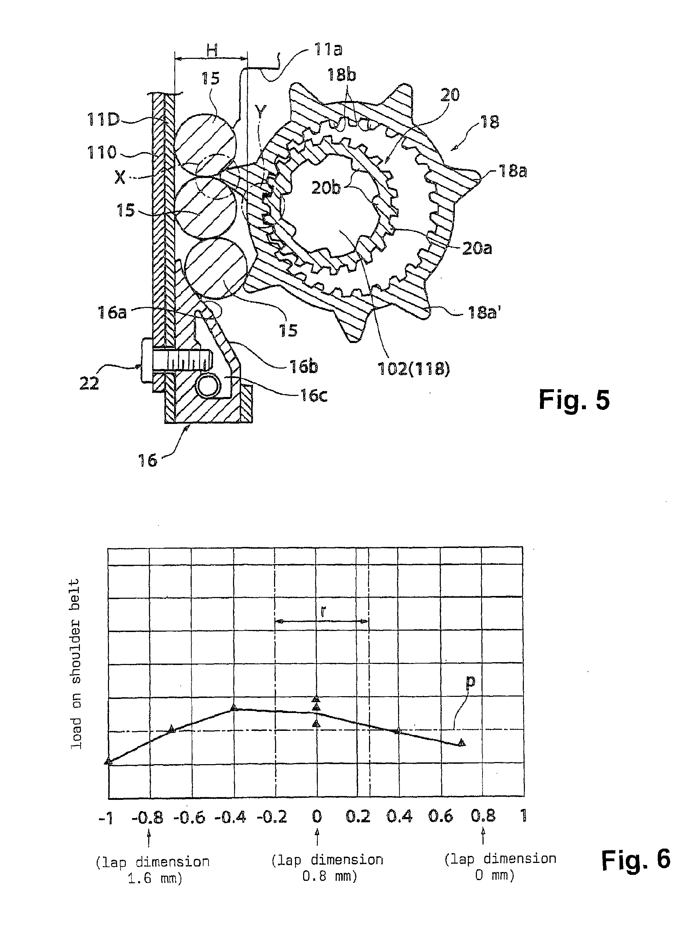

Fig. 5 is a partially enlarged frontal view of the pretensioner in its operative state, for clearly showing clearance of a path for the balls.
Fig. 6 is a graph showing the relation between the lap dimension (abscissa) and the load on the shoulder belt (the belt winding force of the pretensioner: ordinate).
Fig. 7 is an exploded perspective view showing one example of seat belt retractor with a pretensioner.
Fig. 8 is a cross-sectional view showing the pretensioner shown in Fig.7 in its operative state (when a ring gear and a pinion are meshed with each other).
Fig. 9 is a partially enlarged frontal view showing the pretensioner in its operative state.

The pretensioner shown in Fig. 1-Fig. 5 is assembled in a seat belt retractor as mentioned above (see Fig. 7). The basic structure of the seat belt retractor is the same as the one shown in Fig. 7.

The pretensioner 10 will now be described with reference to Fig. 1 through Fig. 4 and Fig. 7.
The pretensioner 10 comprises a pipe 11. The pipe 11 is interposed between the pretensioner cover 109 and the pretensioner plate 110 (see Fig. 7) and, in this state, is attached to the outside of a side wall of the base frame 101 (see Fig. 7). The pipe 11 is a steel pipe which is processed by bending (as an example). As shown in Fig. 1 and Fig. 2, the pipe 11 continuously extends from the proximal end 11A at the bottom side in the drawings to a straight portion 11B. The portion between the proximal end 11A and the straight portion 11B is bent at approximately 90° from the proximal end 11A toward the upper right. The pipe 11 further continuously extends from the straight portion 11B to a semi-circular portion 11C at the top side in the drawings. The pipe 11 further extends downwardly from the semi-circular portion 11C to a straight portion 11D. Formed in the straight portion 11D is a cut-out 11a facing an area surrounded by the pipe 11. One or more of external teeth 18a of the ring gear 18, described later, are partially positioned inside the cut-out 11 a. The inner surface of the straight portion 11D is applied with lubrication coating (this coating may be omitted). Employed as this coating material may be solid lubricant of MoS₂ series (for example, Solvest "dry coat"® available from STT INC.).

The ring gear 18 is arranged in the area surrounded by the pipe 11 (this area will be referred to as "the inner area of the pipe 11"). The ring gear 18 is held at a predetermined position in the inner area of the pipe 11 by two pins 117 (see Fig. 7) of the pretensioner cover 109. Also arranged inside the ring gear 18 is a pinion 20. The pinion 20 has external teeth 20a formed around the outer periphery thereof and internal teeth 20b formed around the inner periphery thereof. As best seen in Fig. 3, the pinion 20 is fixedly fitted around the spool gear 119 of the spool 102 (see Fig. 7).

Formed around the inner periphery of the ring gear 18 are internal teeth 18b capable of meshing with the external teeth 20a of the pinion 20. Since the inner diameter of the ring gear 18 is larger than the outer diameter of the pinion 20, a clearance is ensured between the internal teeth 18b of the ring gear 18 and the external teeth 20a of the pinion 20 so that the ring gear 18 and the pinion 20 are out of mesh in the state shown in Fig. 1. Therefore, the spool 102 (see Fig. 7) can freely rotate, in spite of the existence of the pretensioner 10.

The ring gear 18 has a plurality of external teeth 18a formed around the outer periphery thereof. The external teeth 18a project outwardly just like projections (the number of the teeth is seven in the illustrated example). Though the respective external teeth are equally spaced, only the tooth marked by numeral 18a' is offset. The offset tooth 18a' is positioned inside the cut-off 11a of the straight portion 11D of the pipe 11 and is in contact with the front-most ball 15-1 (described later) in the pipe 11.

Formed at the proximal end 11A of the pipe 11 is a generator-housing portion 11E of which diameter is slightly larger than that of the pipe 11. A gas generator 12 is housed in the generator-housing portion 11E. The gas generator 12 ignites explosive therein according to a signal outputted from a collision detecting means (not shown) in the event of an accident such as a vehicle collision so as to supply gas pressure into the pipe 11. The gas generator 12 is fixed by a crimped flange portion 11e after inserted in the generator-housing portion 11E.

Arranged inside the pipe 11 are, in the order from the gas generator 12, a coil spring 13, a piston 14, and a plurality of balls 15 (15 balls in the illustrated example).
Each ball 15 is a sphere made of metal such as steel. The surface of each ball 15 may be applied with lubrication coating. Employed as this coating material may be solid lubricant of MoS₂ series (for example, Solvest® "dry coat" available from STT INC.) in the same manner as the coating material applied to the inner surface of the straight portion 11D of the pipe 11. The outer diameter of the ball 15 is slightly smaller than the inner diameter of the pipe 11, thus allowing relative smooth movement of the balls inside the pipe 11. The front-most ball 15-1 is in contact with the external tooth 18a' of the ring gear 18.

The piston 14 is made of resin such as silicone rubber. The piston 14 is deformed to increase its diameter after the discharge of gas so that the piston 14 comes in close contact with the inner surface of the pipe 11, thereby achieving sealing function for preventing gas from leaking to the distal end (the other end) side.
The coil spring 13 is disposed between the gas generator 12 and the piston 14 to bias the piston 14 in a direction toward the distal end. Because of the biasing force of the coil spring 13, the front-most ball 15-1 is in contact with the external tooth 18a' of the ring gear 18.

A guide block 16 is attached to the end of the straight portion 11D of the pipe 11 by a vis 22. The guide block 16 is a cylindrical member having a slant end face which is formed by obliquely cutting. This slant end face functions as a guide face. The guide face comprises a first guide face 16a and a second guide face 16b. The first guide face 16a is formed at the top end of the guide block into an arc shape substantially concentrical with the ring gear 18. During the actuation of the pretensioner, balls 15 are forced out of the pipe 11 and then collide with the first guide face 16a. On the other hand, the second guide face 16b is a flat face which extend in such a way as to gradually increase the distance from the ring gear 18.
It should be noted that the vis 22 also functions of fixing the pipe 11 to the pretensioner plate 110 (see Fig. 3 and Fig. 7).

The guide block 16 has a through opening 16c which is formed through it to extend from one side to the opposite side along the width direction of the guide face. The through opening 16c is formed in a portion substantially beneath the second guide face 16b. Because of this through opening 16c, most of the second guide face 16b is a thin plate so that the second guide face 16b has poor rigidity. On the other hand, the first guide face 16a has high rigidity because it is backed up by the side walls of the guide block 16 itself.

In Fig. 1 and Fig. 2, numerals 117A, 117B designate portions, shown in sections, of the pretensioner cover 117 (see Fig. 7). The upper portion 117A retains the pipe 11 and the lower portion 117B composes a ball receiving portion 25. Balls 15 forced out of the pipe 11 are gathered in the ball receiving portion 25.

As shown in Fig. 3, a spool bearing 30 is interposed between the spool 102 and the hole 110a of the pretensioner plate 110. The surface of the spool bearing 30 is applied with lubrication coating. Employed as this coating material may be Solvest "dry coat"® in the same manner as mentioned above. Because of the spool bearing 30, the spool 2 is prevented from being directly subjected to the load.

Description will now be made with regard to the clearance for the balls 15 at the distal end portion of the pipe 11 in the aforementioned pretensioner 10 with regard to Figs. 3 through 5.
As shown in Fig. 3 and Fig. 5, the clearance H is a dimension between the inner surface of the straight portion 11D of the pipe 11 and the outer periphery (the root of the external teeth 18a) of the ring gear 18. The clearance H is determined by the balance of the followings: (a) the inner diameter of the pipe 11, (b) the root circle diameter of the external teeth 18a of the ring gear 18 and the pitch of the external teeth 18a, and (c) the position of the spool 102 coupled with the pinion 20. The external teeth 18a of the ring gear 18 are partially positioned in the cut-out 11a of the pipe 11 as mentioned above. The space for allowing the balls 15 to pass is defined by the inner surface of the straight portion 11D of the pipe 11 and contact portions of the external teeth 18a of the ring gear 18 with the balls 15. The clearance H is set in such a manner that the width of the space is smaller than the diameter of the balls 15.

Concretely, as shown in Fig. 4, the respective components of the above (a) through (c) are positioned in such a manner that the lap dimension "t" between the balls 15 and the inner surface of the straight portion 11D of the pipe 11 when the balls 15 pass is about 0.9 mm ± 0.2 mm, preferably 0.8 mm. The outer diameter of each ball 15 is 10.6 mm, the inner diameter of the pipe is 11.0 mm, and the wall thickness of the pipe is 1.8 mm.
The lap dimension "t" is defined to correspond to the elastic deformable ranges of the pipe 11, the plate 110, and the ring gear 18 when the balls 15 pass, thereby allowing smooth passage of the balls 15.
The relation between the lap dimension "t" and the output of the pretensioner (load on a shoulder belt) will be described in detail with regard to Fig. 6 later.

Hereinafter, the operation of the pretensioner 10 having the aforementioned structure will be described.
When the pretensioner is not actuated (in the normal state), the ring gear 18 is held in its predetermined position in the inner area of the pipe 11 by the two pins 117 (see Fig. 7) of the pretensioner cover 109 and the internal teeth 18b of the ring gear 18 are meshed with none of the external teeth 20a of the pinion 20 as shown in Fig. 1. Therefore, the pretensioner 10 in this state has no effect on the rotation of the spool 102.

As a vehicle collision is detected, a signal is transmitted to the gas generator 12. According to this signal, as shown in Fig. 2, the gas generator 12 is ignited to supply gas pressure into the pipe 11. The piston 14 which is nearest to the gas generator 12 is pushed by the gas pressure. The force on the piston 14 is subsequently transmitted to the balls 15. Thus, the force is transmitted to the front-most ball 15-1 (which is in contact with the external tooth 18a' of the ring gear 18). During this, the gas pressure deforms and increase the diameter of the piston 14 so that the piston 14 functions as seal relative to the inner surface of the pipe 11, thereby preventing gas from leaking to the distal end side.

The force transmitted through the balls 15 exerts force on the ring gear 18. As a result of this, the pins 117 (see Fig. 7) are sheared so as to release the ring gear 18. Therefore, the ring gear 18 moves to the pinion 20, whereby the internal teeth 18b of the ring gear 18 are meshed with the external teeth 20a of the pinion 20. The ring gear 18 is rotated about the axis thereof by the force of the balls 15 pushing the external teeth 18a. Before the ring gear 18 starts to move, the front-most ball 15-1 is in contact with the external tooth 18a' of the ring gear 18 in such an attitude of applying torque to the external tooth 18a', thereby ensuring the rotation of the ring gear 18.

As the balls 15 are continuously pushed out by the gas pressure, each ball 15 falls in a corresponding one of valleys formed between the external teeth 18a of the ring gear 18. In this case, one valley of the ring gear 18 corresponds to and is engaged with two balls 15. The engagements of the balls 15 rotates the ring gear 18 in the counter-clockwise direction in Fig. 2. Since the external teeth 20a of the pinion and the internal teeth 18b of the ring gear 18 are meshed with each other, the rotation of the ring gear 18 is transmitted to the pinion 20 so that the ring gear 18 and the pinion 20 rotate with each other. Since the pinion 20 is fitted to the spool gear 119 of the spool 102, the spool 102 rotates with the pinion 20, thereby immediately taking up some length of the seat belt S (see Fig. 7) in the belt-winding direction. The balls 15 are forced out of the pipe 11 through the end opening 21b of the pipe 11 and are gathered into the ball receiving portion 25.

Since the lap dimension "t" shown in Fig. 4 is set, the balls 15 pass through a space which is narrower than the diameter of the balls itself with pressing the external teeth 18a of the ring gear 18 during the balls 15 pass through the distal end side of the pipe 11. During this, the straight portion 11D of the pipe 11 and the ring gear 18 are elastically deformed by the pressing force of the balls 15, thereby canceling the lap dimension "t". Therefore, the balls 15 are never blocked from passing and thus never locked. Because of the existence of the lap dimension "t", there is no surplus space in the path for the balls 15. This prevents the balls 15 from running off and prevents the ring gear 118 from shifting, thereby securely conducting the meshing between the internal teeth 18b of the ring gear 18 and the external teeth 20a of the pinion 20. Therefore, the operation of the pretensioner 10 is stabilized.

It should be understood that the pipe 11 and the ring gear 18 are never broken by the passage of the balls because the lap dimension "t" is defined based on the elastic deformable ranges of the pipe 11 and the ring gear 18. The surface of each ball 15 and the inner surface of the straight portion 11D of the pipe 11 are applied with lubrication coating, thereby reducing frictional resistance caused when the balls 15 pass and thus achieving reduction in power loss of the pretensioner.

It should be noted that the output of the pretensioner 10 varies depending on the following factors (1)-(3):
(1) lap dimension "t" (clearance H);
(2) contact angle between the external tooth 18a of the ring gear 18 and the ball 15 (see the portion marked by X in Fig. 5); and
(3) length of path of contact between the internal teeth 18b of the ring gear 18 and the external teeth 20a of the pinion 20 (see the portion marked by Y in Fig. 5).
Now, description will be made with regard to the relation between the output of the pretensioner (performance of winding the belt) and variation in the lap dimension when the contact angle of the above (2) and the length of path of contact of the above (3) are set at their predetermined values.

Fig. 6 is a graph showing the relation between the lap dimension (abscissa) and the load on the shoulder belt (the belt winding force of the pretensioner: ordinate).
In Fig. 6, the reference value 0 in the abscissa indicates that the clearance H = 11.3 mm and the lap dimension t = 0.8 mm. The reference value 0.8 indicates that the lap dimension t = 0 mm (the clearance H = 10.5 mm). The reference value -0.8 indicates that the lap dimension t = 1.6 mm (the clearance H = 12.1 mm). A lateral line "p" is a desired value (target value) of the load on the shoulder belt.

The range of the lap dimension described in this embodiment is indicated by "r" in the graph. In this range, the resultant load on the shoulder belt securely exceeds the lateral line "p" (the target value). Therefore, the output of the pretensioner is not affected by the lap dimension which is set to reduce the space of the path for the balls 15.

### [Effects of the Invention]

As described in the above, the present invention can provide a pretensioner which achieves more stable operation.

## Claims

1. A pretensioner (10) which rotates a spool (102) of a seat belt retractor in the belt winding direction to pretension a seat belt in the event of an emergency, comprising:
a gas generator (12);
a plurality of serial balls (15) which will be accelerated by the gas from the gas generator (12);
a path (11) for guiding the balls (15); and
a rotational member (18) having a plurality of driving points (18a) wherein said balls (15) collide with said driving points (18a) so as to apply rotational torque to said rotatable member (18), said pretensioner being **characterized in that**
the driving points (18a) of said rotational member are partially positioned within said path (11), and
the space for passage of said balls (15) which is defined by said path (11) and said driving points (18a) is narrower than the diameter of said balls (15).

2. A pretensioner (10) as claimed in claim 1, being **characterized in that** the surfaces of said balls (15) are applied with lubrication coating.
